# EUROPÄISCHE PATENTSCHRIFT

(11) **EP 1 427 637 B1**
(45) Veröffentlichungstag und Bekanntmachung des Hinweises auf die Patenterteilung: **12.01.2005**
(21) Anmeldenummer: 02798722.1
(22) Anmeldetag: 14.09.2002
(51) Int. Cl.: B65B 21/00

(54) **PACKTULPE ZUM KOPFSEITIGEN ERGREIFEN VON INSBESONDERE DURCH KORKEN, KRON-, SCHRAUB- ODER BÜGELVERSCHLUSS VERSCHLIESSBAREN FLASCHEN**
PACKING TULIP GRIPPER FOR GRIPPING BOTTLES THAT CAN BE SEALED BY A CORK, CROWN-TOP, SCREW-TOP OR LEVER STOPPER
TULIPE DE PRISE DESTINEE A LA PRISE COTE TETE DE BOUTEILLES NOTAMMENT FERMEES AU MOYEN DE BOUCHONS EN LIEGES, DE BOUCHONS A COURONNE, DE BOUCHONS VISSES OU DE BOUCHONS MECANIQUES

(30) Priorität: 17.09.2001 DE 10145821; 25.10.2001 DE 20117470 U; 27.02.2002 DE 10208343
(43) Veröffentlichungstag der Anmeldung: 16.06.2004
(73) Patentinhaber: Zodrow, Rudolf, D-40235 Düsseldorf (DE)
(72) Erfinder: Zodrow, Rudolf, D-40235 Düsseldorf (DE)
(74) Vertreter: Knauf, Rudolf, Dipl.-Ing.
(86) Internationale Anmeldenummer: PCT/EP2002/010325
(87) Internationale Veröffentlichungsnummer: WO 2003/024802

(56) Entgegenhaltungen:
- DE-A- 1 586 011
- DE-B- 1 211 101
- DE-C- 4 325 556
- DE-U- 1 938 061
- DE-U- 20 117 470
- US-A- 3 831 995

## Beschreibung

Die Erfindung betrifft eine Packtulpe zum kopfseitigen Ergreifen von insbesondere durch Korken, Kron-, Schrauboder Bügelverschluß verschließbaren Flaschen, die in einem topfförmigen Gehäuse einen hülsenförmigen, mit seinem vorderen Ende am Topfrand des Gehäuses abgestützten, elastisch verformbaren Einsatz und einen auf den Einsatz an dessen rückseitigem Ende mit einer axialen Druckkraft einwirkenden Stellkolben aufweist, wobei in der geschlossenen Wand des Einsatzes mehrere in axiale Richtung sich erstreckende und über den Umfang des Einsatzes verteilte, durch außenseitige Nuten gebildete Materialschwächungen vorgesehen sind.

Zum kopfseitigen Ergreifen von Flaschen in Flaschenverpackungsmaschinen sind Packtulpen bekannt, die in der Regel zu einer Gruppe in einem Packkopf zusammengefaßt sind. Durch den Packkopf werden die Packtulpen gemeinsam auf eine entsprechende Gruppe von Flaschen abgesenkt. Dabei tauchen die Flaschen mit ihren Köpfen in die einzelnen Packtulpen ein. Die Packtulpen sind dafür ausgelegt, bei entsprechender Ansteuerung die Flaschen durch radiale Klemmung zu ergreifen. Die ergriffenen Flaschen einer Gruppe können dann mit dem Packkopf angehoben und versetzt werden, beispielsweise in einen mit Stellplätzen für die einzelnen Flaschen versehenen Kasten oder freistehend auf ein Transportband.

Für die Funktion der ansteuerbaren Packtulpen ist nicht nur wichtig, daß sie die Flaschen durch radiale Klemmung des Flaschenkopfes sicher ergreifen, sondern auch daß das Ergreifen möglichst schonend erfolgt. Dies gilt vor allem dann, wenn der Flaschenkopf eine besondere Ausstattung aufweist, beispielsweise foliiert ist. Außerdem soll die Packtulpe möglichst nahe an ihrem vorderen Ende den Flaschenkopf erfassen, so daß der Flaschenkopf nur wenig in die Packtulpe einzutauchen braucht, um sicher ergriffen werden zu können aber auch um die Flasche schnell freizugeben, was vor allem beim Aufsetzen freistehender Flaschen, insbesondere leerer Kunststoffflaschen, auf ein Transportband die Gefahr des Umkippens vermindert. Für eine schnelle Freigabe ist auch wichtig, daß der Stellkolben und der Einsatz durch den verformten Einsatz schnell zurückgeführt werden. Schließlich sollen die Mittel, die unmittelbar mit dem Flaschenkopf in Berührung kommen, eine möglichst lange Standzeit haben.

Bei einer bekannten Packtulpe (FR-A- 1 044 075) besteht der Packtulpeneinsatz aus einer massiven Hülse aus elastisch verformbarem Material. Eine solche Packtulpe hat wegen der geschlossenen Wand über die gesamte Höhe und den gesamten Umfang den Vorteil, daß der Innenraum der Packtulpe beim Reinigen vor Reinigungsflüssigkeit und im Packbetrieb vor eindringendem Schmutz weitgehend geschützt ist. Von Nachteil ist jedoch, daß verhältnismäßig hohe axiale Druckkräfte aufgewendet werden müssen, um den massiv ausgebildeten hülsenförmigen Einsatz zum Ergreifen des Flaschenkopfes zu verformen. Darüber hinaus verhindert die geschlossene Wand des hülsenförmigen Einsatzes einen Druckausgleich zwischen dem eingeschlossenen Ringraum zwischen dem Einsatz und dem Gehäuse auf der einen Seite und dem Innenraum des Einsatzes auf der anderen Seite, was sowohl beim axialen Zusammendrücken des Einsatzes als auch beim axialen Entspannen des Einsatzes sich auf die Beweglichkeit des Einsatzes nachteilig auswirken kann.

Bei einer anderen bekannten Packtulpe (EP 0 345 440 B1) weist der aus elastisch verformbarem Material bestehende hülsenförmige Einsatz keine geschlossene Wand auf. Entweder sind in dem hülsenförmigen Einsatz fensterartige Durchbrüche vorgesehen, oder er besteht aus mit Abstand voneinander angeordneten, axial verlaufenden Lamellen. Dabei setzt sich der Einsatz aus einem sich etwa über 2/3 axialer Länge erstreckenden oberen Abschnitt und einem sich nach unter konisch erweiternden und über 1/3 Länge sich erstreckenden unteren Abschnitt zusammen. Mit solchen Packtulpen sind zwar die Probleme einer unerwünscht hohen axialen Druckkraft und eines gewünschten Druckausgleichs gelöst, doch geht diese Lösung auf Kosten des Schutzes der Packtulpe vor eindringendem Schmutz und eindringender Reinigungsflüssigkeit, weil die Packtulpe nicht länger durch eine geschlossene Wand des hülsenförmigen Einsatzes geschützt ist. Außerdem wird eine empfindliche Ausstattung des Flaschenkopfes, z.B. eine Foliierung, durch die Kanten der fensterartigen Durchbrüche oder der Lamellen stark belastet. Im Falle von Lamellen besteht darüber hinaus der Nachteil, daß sie mangels Führung den Flaschenkopf nicht gleichmäßig konzentrisch ergreifen. Darüber hinaus liegt der hauptsächliche Greifbereich des Einsatzes nicht nahe an seinem vorderen Ende sondern etwa auf dessen halber axialer Länge. Schließlich besteht bei bestimmten Flaschenverschlüssen, wie Bügel- oder Drahtverschlüssen, die Gefahr des Verhakens an den fensterartigen Durchbrüchen.

Ferner ist eine Packtulpe der eingangs genannten Art bekannt (DE 200 03 461 U1), deren Wand allseits geschlossen ist, wobei die Wand sich aus sich über die gesamte axiale Länge des Einsatzes in axialer Richtung erstreckenden Streifen mit von Streifen zu Streifen abwechselnd dünnerer oder dickerer Wandstärke zusammensetzt. Dabei liegen die Streifen dünnerer Wandstärke im radial äußeren Bereich. Das bedeutet, daß die Flaschenköpfe von den Streifen dickerer Wandstärke erfaßt werden, was sich wie bei der oben beschriebenen Packtulpe mit den fensterartigen Durchbrüchen oder Lamellen wegen der scharfen Kanten in einer starken Belastung einer empfindlichen Ausstattung des Flaschenkopfes bemerkbar machen kann. Versuche mit einer solchen Packtulpe haben aber nicht nur diese unerwünscht hohe Belastung einer empfindlichen Flaschenausstattung ergeben, sondern auch und vor allem einen unzureichenden Halt des vorderen Endes des Einsatzes am Topfrand des Gehäuses.

Ferner ist eine Packtulpe mit einem topfförmigen Einsatz bekannt (DE 41 37 362 A1), bei der die geschlossene Wand des topfförmigen Einsatzes nur im mittleren Höhenbereich sich axial erstreckende und über den Umfang des Einsatzes verteilte Materialschwächungen aufweist. Die Materialschwächungen in der über ihre gesamte axiale Länge eine konstante Materialstärke/-dicke aufweisenden Wand können als innen- oder außenseitige, axiale, schmale Vertiefungen und Ausnehmungen ausgebildet sein, wobei Vertiefungen an der Innenseite als bevorzugte Ausführung angesehen werden. Auch bei diesem topfförmigen Einsatz aus elastischem Material besteht zumindest in der bevorzugten Ausführung wegen der scharfen Kanten an den Ausnehmungen die Gefahr einer unerwünscht hohen Belastung einer empfindlichen Ausstattung des Flaschenkopfes. Hinzu kommt, daß keine besonderen Vorkehrungen getroffen sind, um den topfförmigen Einsatz an seinem vorderen Ende sicher im Gehäuse zu halten und einen möglichst nahe am vorderen Ende liegenden Einspannbereich zu erhalten.

Schließlich ist eine Packtulpe der eingangs genannten Art (DE 43 19 879 C1) bekannt, die sich von der oben beschriebenen Packtulpe mit dem topfförmigen Einsatz, in dessen über ihre gesamte axiale Länge eine konstante Wandstärke aufweisenden Wand durch außenseitige Nuten im mittleren Bereich gebildete Materialschwächungen nur dadurch unterscheidet, daß der Einsatz nicht topfförmig, sondern hülsenförmig ist. Was die Gebrauchstüchtigkeit eines solchen Ensatzes anbelangt, gelten deshalb für den hülsenförmigen Einsatz die gleichen Eigenschaften wie für den topfförmigen Einsatz.

Der Erfindung liegt die Aufgabe zugrunde, eine Packtulpe der eingangs genannten Art zu schaffen, deren hülsenförmiger Einsatz bei leichter axialer Verformbarkeit und unter schonender Behandlung einer empfindlichen Ausstattung des Flaschenkopfes beim Ergreifen des Flaschenkopfes mit einem möglichst nahe an seinem vorderen Ende liegenden Bereich sicher im Gehäuse gehalten wird.

Diese Aufgabe wird mit einer Packtulpe der eingangs genannten Art dadurch gelöst, daß auf den hülsenförmigen Einsatz an seinem vorderen Ende radial nach außen wirkende Stützmittel einwirken. Die Stützmittel verhindern, daß beim axialen Stauchen und radialen Zusammendrücken des Einsatzes dieser mit seinem unteren Ende unkontrolliert aus dem topfförmigen Gehäuse herausspringt und damit seine Greiffunktion nicht mehr ausfüllen kann. Die Stützmittel erlauben es auch, daß die axialen Materialschwächungen sich bis zu den Stützmitteln erstrecken können, so daß der Greifbereich (Querschnittsverengung beim Stauchen des Einsatzes) möglichst nah am vorderen Ende des Einsatzes liegt.

Die nach außen wirkenden Stützmittel lassen sich auf verschiedene Art und Weise konstruktiv verwirklichen. So können die Stützmittel von einem den Einsatz übergreifenden, am Topfrand ausgebildeten Kragen gebildet sein. Alternativ können sie in einer Versteifung des hülsenförmigen Einsatzes bestehen. Die Versteifung ihrerseits kann zum einen aus einem steiferen Material als der übrige bestimmungsgemäß leicht verformbare Einsatz sein, zum anderen kann sie von einem im vorderen Ende des Einsatzes eingebetteten Versteifungsring gebildet sein. Die bevorzugte Versteifung besteht aber in einem äußeren Verstärkungskragen. Diese Art der Versteifung ist deshalb bevorzugt, weil dann das vordere Ende aus demselben Material wie der übrige Einsatz bestehen kann, was die Herstellung durch Gießen, Pressen oder Spritzen vereinfacht.

Die außenseitigen Nuten erstrecken sich vorteilhaft bis zum vorderen Ende. Über sie kann dann auch eine Hinterlüftung des Zwischenraums zwischen Einsatz und Gehäuse stattfinden, wenn das Gehäuse keine eigene Entlüftungsbohrung hat. Dies gilt insbesondere dann, wenn die Enden der Nuten in axiale Durchbrüche im Verstärkungskragen auslaufen. Um die mit diesen Durchbrüchen verbundene Schwächung des eventuell vorgesehenen Verstärkungskragens einigermaßen zu kompensieren, sind vorzugsweise in den Durchbrüchen radial angeordnete Stege vorgesehen. Diese Stege sorgen auch dafür, daß der Verstärkungskragen auch beim axialen Stauchen in den geschwächten Bereichen in seiner ursprünglichen Position bleibt. Dieser Effekt in Verbindung mit den geschwächten Bereichen bewirkt, daß der Greifbereich nahe am vorderen Ende sich einstellt. Das ist insbesondere dann der Fall, wenn die Stege in radialer Richtung trapezförmig sind.

Die Hinterlüftung des Ringraums zwischen dem Einsatz und dem Gehäuse über die axialen Durchbrüche im Verstärkungskragen wird erleichtert, wenn an der vorderen Stirnseite des Verstärkungskragens der konische Bereich gegenüber dem äußeren zylindrischen Bereich axial zurückversetzt ist.

Die außenseitige Nuten, durch die die Materialschwächungen gebildet sind, haben gegenüber den innenseitigen Nuten den Vorteil, daß der Einsatz eine glatte Innenseite hat, die die Gefahr des Hängenbleibens des Flaschenkopfes beim Einund Ausführen des Flaschenkopfes mindert. Da beim Stauchen des Einsatzes sich die dünne Haut im Bereich der Nuten sich nach hinten in die durch die Nuten gebildeten Auffalträume faltet, ist sie auch weitgehend vor mechanischen Belastungen durch den Flaschenkopf geschützt. Um bei der Faltung der Haut für eine lange Gebrauchsdauer ungünstige kleine Krümmungsradien zu vermeiden, sind nach einer Ausgestaltung der Erfindung im mittleren Bereich der Nuten axial verlaufende Rippen vorgesehen.

Zum Zwecke der besseren Fixierung des Einsatzes auch im rückseitigen Bereich kann er an seinem rückseitigen Rand einen inneren Versteifungskragen aufweisen.

Nach einer weiteren Ausgestaltung der Erfindung hat der Einsatz im am vorderen Ende liegenden Bereich die Form eines zum vorderen Ende sich erweiternden Konus, während die Außenseite des Verstärkungskragens zylindrisch ist. Diese Ausführung erleichtert zum einen das Einführen der Flaschenköpfe und zum anderen gibt es dem Versteifungskragen an der üblicherweise zylindrischen Innenwand des Gehäuses eine großflächige Abstützung.

Um beim axialen Zusammendrücken des Einsatzes die radiale Verformung kontrolliert in dem Sinne zu beeinflussen, daß der Greifbereich möglichst nahe an seinem vorderen Ende liegt, kann der hülsenförmige Einsatz sich aus einem im rückseitigen und mittleren Bereich zylindrischen Wandabschnitt und aus einem vorderen kegeligen Wandabschnitt zusammensetzen. Dabei ist die Zusammensetzung aus sich in axialer Richtung erstreckenden voll und geschwächt ausgebildeten Wandbereichen wichtig. Die radiale Verformung kann auch dadurch beeinflußt werden, daß im Greifbereich die in der Materialstärke ungeschwächten Wandteile durch Verbreiterung der Nuten seitliche Einschnürungen aufweisen.

Zum besseren Ergreifen des Flaschenkopfes kann der hülsenförmige Einsatz an der Wandinnenseite einen den Reib-/Formschluß zum zu ergreifenden Flaschenkopf verbessernde Profilierung aufweisen.

Die besonderen Vorteile der erfindungsgemäßen Packtulpe bestehen darin, daß der Einsatz sich einerseits trotz der geschlossenen Wand im Greifbereich verhältnismäßig leicht axial verformen läßt, der Einsatz andererseits aber wegen der am vorderen Ende des Einsatzes wirksamen Stütztmittel sicher im Gehäuse gehalten wird. Die für die axiale und radiale Verformung des Einsatzes erforderlichen Druckkräfte sind deshalb vergleichsweise klein, weil die geschlossene Wand des Einsatzes nicht über ihren Umfang und ihre gesamte Höhe mit voller Wandstärke ausgebildet ist, sondern in Umfangsrichtung verteilte geschwächte Bereiche aufweist. Dabei ist besonders vorteilhaft, wenn die Wandteile in den geschwächten Bereichen innen liegen, weil dann diese Wandteile sich problemlos in die rückseitigen Nuten auffalten können, wo sie weitgehend vor mechanischen Belastungen durch den Flaschenkopf geschützt sind, und so Freiraum für die sich beim axialen Zusammendrücken radial nach innen verlagernden, in der Wandstärke voll ausgebildeten Wandteile schaffen. Die geschlossene Wand des Einsatzes insbesondere bei glatter Innenseite wirkt sich nicht nur hinsichtlich des Schutzes des Innenraums der Packtulpe vor eindringendem Schmutz und eindringender Flüssigkeit vorteilhaft aus, sondern auch hinsichtlich eines materialschonenden Ergreifens eines Flaschenkopfes, worauf es vor allem bei foliierten Flaschenköpfen ankommt. Im Unterschied zu fensterartigen Durchbrüchen und zum Innenraum gelegenen Vertiefungen gibt es jedenfalls bei einer geschlossenen innenseitigen Wand keine scharfen Kanten. Auch kann es zu keinem Verhaken abstehender Verschlußkomponenten kommen, weshalb die erfindungsgemäß Packtulpe grundsätzlich auch für Bügelverschlußflaschen geeignet ist. Durch das Zusammenspiel von geschwächten und nicht geschwächten Wandteilen, dem Übergang vom zylindrischen Abschnitt in den konischen Abschnitt und der radialen Abstützung des vorderen Endes, z.B. durch den übergreifenden Kragen des Gehäuses oder den Verstärkungskragen insbesondere mit den stützenden Stegen in seinen Durchbrüchen, kann gezielt der Greifbereich nahe an das vordere Ende der Packtulpe gelegt werden. Dies gelingt vor allem, wenn in den ungeschwächten Bereichen (Stegen) im vorderen Bereich des Einsatzes rückseitige axiale Nuten ausgebildet sind. Schließlich wirkt sich die geschlossene Wand auch vorteilhaft auf die Standzeit des als Verschleißteil eingesetzten hülsenförmigen Einsatzes aus.

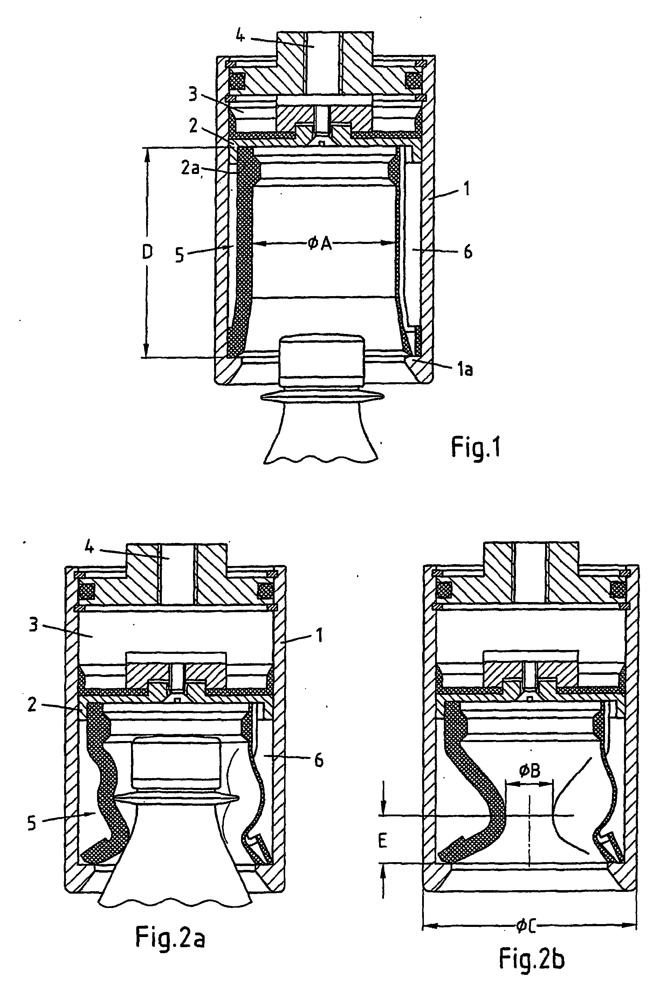

Im folgenden wird die Erfindung anhand einer Zeichnung näher erläutert. Im einzelnen zeigen:
- Fig. 1: eine Packtulpe über einer Schraubverschluß-flasche mit angeformtem Kragen im axialen Schnitt,
- Fig. 2a: die Packtulpe der Fig. 1 bei erfaßter Schraubverschlußflasche im axialen Schnitt,
- Fig. 2b: die Packtulpe der Fig. 1 mit gestauchtem Einsatz aber ohne Flasche im axialen Schnitt,
- Fig. 3: einen elastischen Einsatz der Packtulpe gemäß Fig. 1 im axialen Schnitt,
- Fig. 4: den Einsatz gemäß Fig. 3 im Querschnitt nach Linie IV-IV,
- Fig. 5: den Einsatz gemäß Fig. 3 im Querschnitt nach Linie V-V der Fig. 3,
- Fig. 6: eine Packtulpe über einer Schraubverschluß-flasche in einer zu Fig. 1 anderen Ausführung im axialen Schnitt,
- Fig. 7: die Packtulpe der Fig. 1 bei erfaßter Schraubverschlußflasche im axialen Schnitt,
- Fig. 8: eine Packtulpe über einer Kapselverschlußflasche in einer zu Fig. 1 und 6 anderen Ausführung im axialen Schnitt,
- Fig. 9: die Packtulpe gemäß Fig. 8 bei erfaßter Kapselverschlußflasche im axialen Schnitt,
- Fig. 10: einen elastischen Einsatz der Packtulpe gemäß Fig. 1 im axialen Schnitt in einer zur Fig. 3 abgewandelten Ausführung,
- Fig. 11: den Einsatz gemäß Fig. 10 in vergrößertem Ausschnitt seines vorderen Endes,
- Fig. 12: den Einsatz gemäß Fig. 10 im Querschnitt nach Linie VI-VI der Fig. 10,
- Fig. 13: den Einsatz gemäß Fig. 10 im Ausschnitt aus der Sicht des Pfeiles P der Fig. 12,
- Fig. 14: eine Packtulpe über einer Schraubverschluß-flasche in einer zu Fig. 1, 6 und 8 anderen Ausführung im axialen Schnitt,
- Fig. 15: einen elastischen Einsatz der Packtulpe gemäß Fig. 14 im axialen Schnitt,
- Fig. 16: den Einsatz gemäß Fig. 15 in axialer Aufsicht,
- Fig. 17: eine Packtulpe in einer zu Fig. 1, 6, 8 und 14 anderen Ausführung im axialen Schnitt,
- Fig. 18: die Packtulpe gemäß Fig. 17 mit gestauchtem Einsatz aber ohne Flasche im axialen Schnitt,
- Fig. 19: den elastischen Einsatz der Packtulpe gemäß Fig. 17 im axialen Schnitt,
- Fig. 20: den Einsatz gemäß Fig. 19 in axialer Aufsicht,
- Fig. 21: eine Packtulpe über einer Schraubverschlußflasche in einer zu den Figuren 1, 6, 8, 14 und 17 anderen Ausführung im axialen Schnitt,
- Fig. 22: eine Packtulpe gemäß Fig. 21 im Querschnitt nach Linie C-C der Fig. 21,
- Fig. 23: die Packtulpe gemäß Fig. 21 mit gestauchtem Einsatz im axialen Schnitt,
- Fig. 24: die Packtulpe gemäß Fig. 21 im Querschnitt nach Linie D-D der Fig. 22,
- Fig. 25: ein Einsatz für eine Packtulpe in einer weiteren Ausführung im axialen Schnitt,
- Fig. 26: der Einsatz gemäß Fig. 25 in Ansicht und im Ausschnitt,
- Fig. 27: der Einsatz gemäß Fig. 25 im Querschnitt nach Linie B-B der Fig. 25,
- Fig. 28: eine Gruppe Bügelverschlußflaschen in einem Transportkasten mit einem Satz darüber angeordneten Packtulpen gemäß Fig. 17 im axialen Schnitt

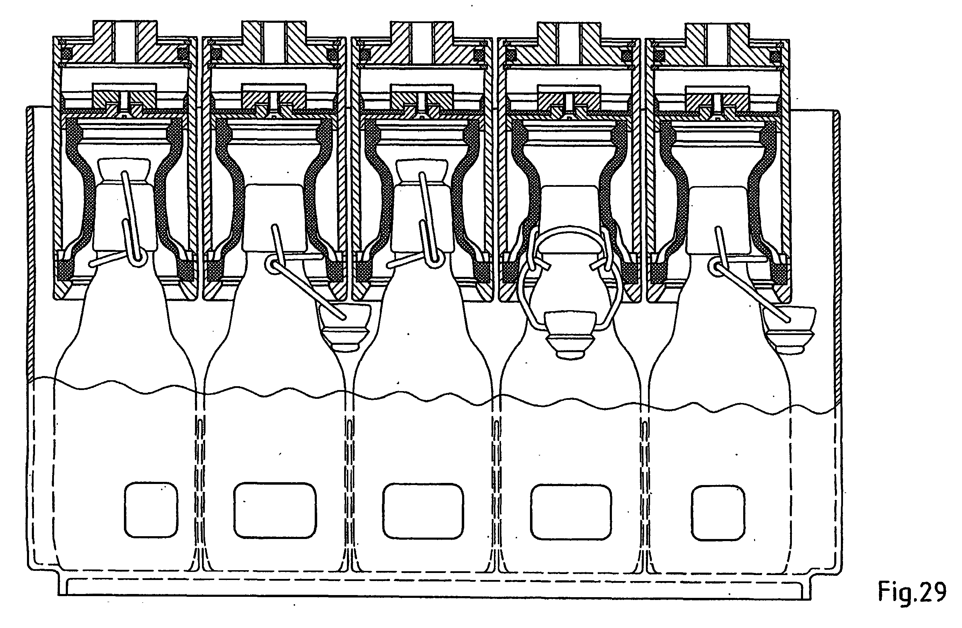

- Fig. 29: und die Gruppe Bügelverschlußflaschen im Transportkasten gemäß Fig. 28 mit die Bügelverschlußflaschen an ihren Köpfen ergreifender Packtulpen im axialen Schnitt.
Die Packtulpe gemäß Fig. 1 besteht aus einem topfförmigen, zylinderförmigen Gehäuse 1, in dem ein mit Druck beaufschlagbarer Stellkolben 2 angeordnet ist. Ein den Stellkolben 2 beaufschlagendes Druckmedium ist einem im Gehäuse 1 über dem Stellkolben 2 vorgesehenen Druckraum 3 über eine Leitung 4 zuführbar.

In dem unten offenen Gehäuse 1 ist ein elastisch verformbarer Einsatz 5 aus elastischem Material, beispielsweise aus Elastomer (Vulkolan gepreßt) oder thermoplastischen Elastomer (Polyuretan gespritzt), untergebracht. Der Einsatz 5 ist hülsenförmig und setzt sich aus einem zylindrischen Wandabschnitt 5a und einen kegeligen Wandabschnitt 5b zusammen. Sein oberer Rand 5 ist mit einem inneren Verstärkungskragen 5c versehen und sitzt in einer entsprechenden Ausnehmung 2a des Stellkolbens 2. Sein unterer Rand ist mit einer als radial nach außen wirkenden Stützmittel dienenden Versteifung, und zwar einem äußeren Verstärkungskragen 5d versehen und auf einem als inneren Kragen ausgebildeten unteren Topfrand 1a des topfförmigen Gehäuses 1 abgestützt, wobei die Außenseite des Verstärkungskragens 5d zylinderförmig ausgebildet ist und satt an der zylinderförmigen Innenseite des Gehäuses 1 anliegt.

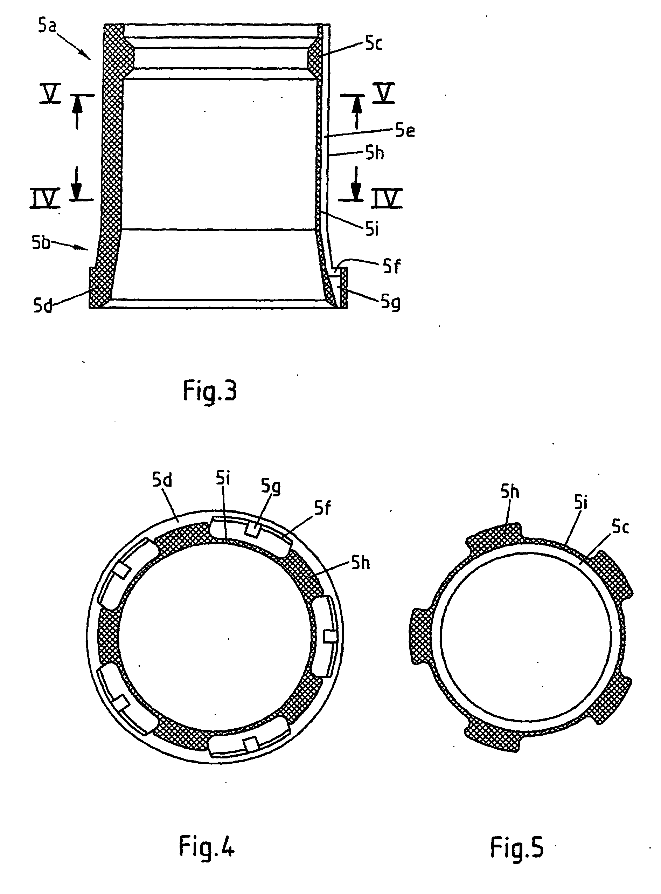

Wie vor allem die Figuren 3 bis 5 zeigen, sind außenseitig in der Wand des Einsatzes 5 als Auffalträume Nuten 5e eingeformt, die über den Umfang verteilt sind und sich über die gesamte Länge des Einsatzes 5 bis zum unteren äußeren Verstärkungskragen 5d erstrecken. Im unteren Verstärkungskragen 5d sind mehrere von den Nuten 5e ausgehende, axiale Durchbrüche 5f vorgesehen, in denen mittig radial stützende Stege 5g angeordnet sind. Die Wand 5a, 5b des Einsatzes 5 ist also geschlossen und setzt sich aus den in voller Materialstärke ausgebildeten axial sich erstreckenden Wandteilen 5h und aus im Bereich der Auffalträume liegenden, in der Materialstärke geschwächten Wandteilen 5i zusammen. Beide Wandteile 5h und 5i zusammen bilden eine innenseitig geschlossene glatte Wand.

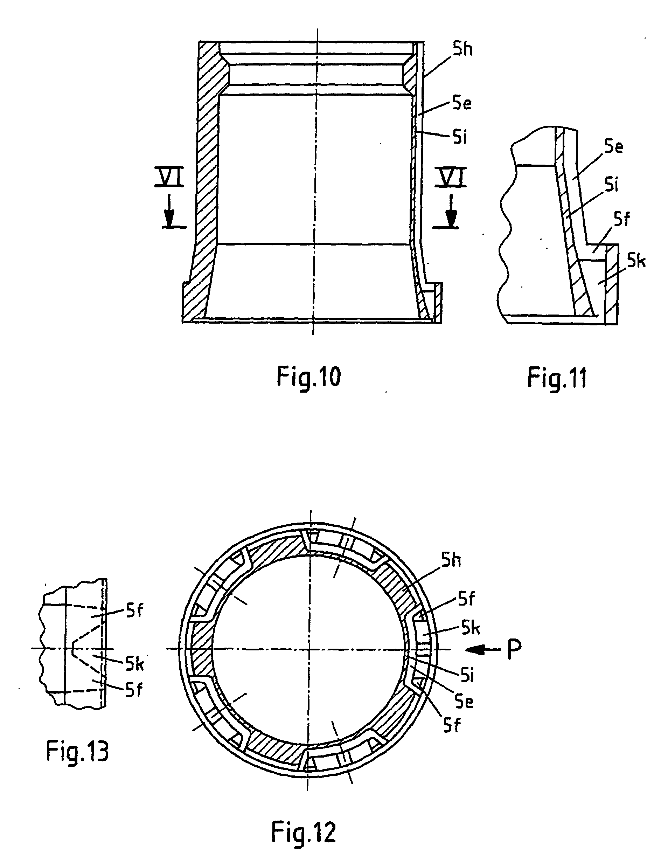

Beim Ausführungsbeispiel der Figuren 10 bis 13 besteht ein Unterschied zum Ausführungsbeispiel der Figuren 1 bis 5 darin, daß die Stirnseite des Verstärkungskragens 5d im konischen inneren Wandbereich gegenüber dem äußeren zylindrischen Wandbereich zurückversetzt ist, so daß sich hier ein freier Zugang zu den axialen Durchbrüchen 5f ergibt. Ein weiterer Unterschied besteht noch darin, daß die in den Durchbrüchen 5f angeordneten Stege 5k einen trapezförmigen radialen Querschnitt haben, der sich zum vorderen Ende des Einsatzes 5 verbreitert.

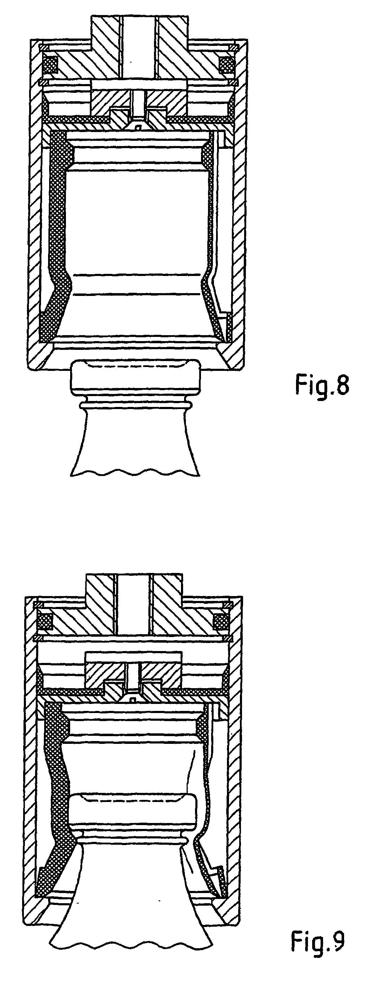

Die Funktion der erfindungsgemäßen Packtulpe ergibt sich aus dem Vergleich der Figuren 1 und 2. Solange der Stellkolben 2 nicht druckbeaufschlagt ist, hält der Einsatz 5 den Stellkolben 2 in der Fig. 1 dargestellten oberen Position. In dieser Stellung kann die Packtulpe auf den Flaschenkopf abgesenkt werden. Wird nun der Stellkolben 2 mit Druck beaufschlagt, dann drückt er den Einsatz 5 axial zusammen. Dabei weichen die Wandteile 5g radial nach innen aus, während die Wandteile 5h ungestört nach außen in die Auffalträume ausweichen und sich hier falten können, wie in Fig. 2 dargestellt. Diese Verformung nach innen wird durch den Knick zwischen den oberen und unteren Wandabschnitten 5a,5b des Einsatzes 5 aber auch durch die stützenden Stege 5g, 5k begünstigt, die den Verstärkungskragen 5d in den Bereichen der geschwächten Wandteile 5i in Position halten, während er in den Bereichen der ungeschwächten Wandteile 5h nach innen abknickt, wie in Fig. 2, 7 und 9 dargestellt ist.. Auf diese Art und Weise wird der Flaschenkopf nahe am vorderen Ende des Einsatzes 5 radial eingeklemmt und die Flasche kann mit der Packtulpe nach oben angehoben werden. Ein Druckausgleich zwischen dem vom Gehäuse 1 und dem Einsatz 5 eingeschlossenen Ringraum 6 und dem Innenraum des Einsatzes 5 findet über die Durchbrüche 5f statt, die am unteren Rand des Verstärkungskragens 5d zum Innern des Einsatzes offen sind. Das wird durch die hier vorgesehene Lippe erreicht, die nicht abdichtend wirkt. Gegebenenfalls kann sie sogar an einzelnen Stellen unterbrochen sein, insbesondere sogar axial zurückversetzt sein, wie beim Ausführungsbeispiel der Figuren 10 bis 13 dargestellt ist.

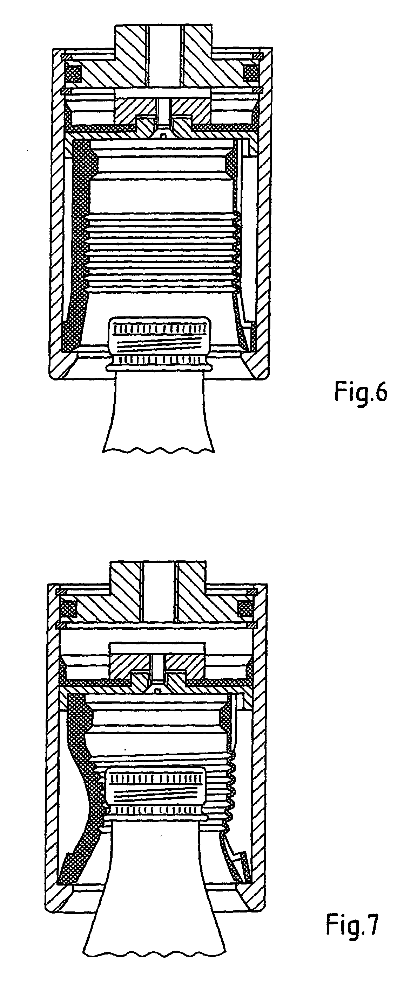

Die Form des Einsatzes 5 kann im Greifbereich profiliert sein, wobei die Profilierung auf die Form des Flaschenkopfes abgestimmt sein kann. Die Figuren 6 bis 9 zeigen Packtulpen mit entsprechend profilierten Einsätzen für verschiedene Flaschenköpfe.

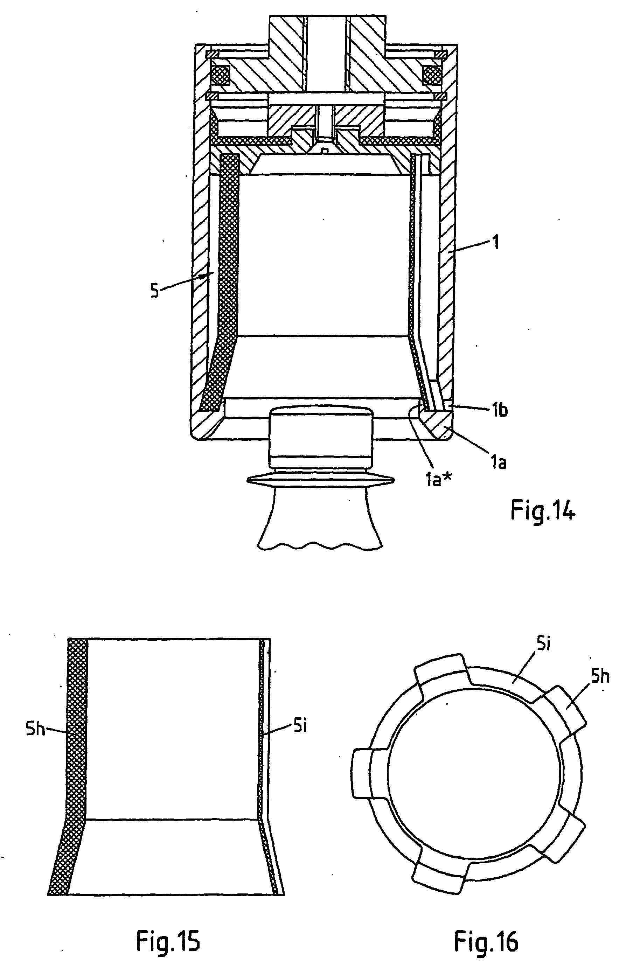

Das Ausführungsbeispiel der Figuren 14 bis 16 unterscheidet sich von den anderen Ausführungsbeispielen vor allem darin, daß am unteren Ende des Einsatzes als radial nach außen wirkende Abstützung kein Verstärkungskragen vorgesehen ist, sondern daß das Ende des Einsatzes 5 von einem angeformten Kragen 1a* des Gehäuses 1 umgriffen ist. Durch diesen Kragen 1a* wird der Einsatz 5 beim axialen Stauchen in seiner Position gehalten. Ein weiterer Unterschied besteht noch darin, daß vom Zwischenraum eine Belüftungsbohrung ib direkt ausgeht.

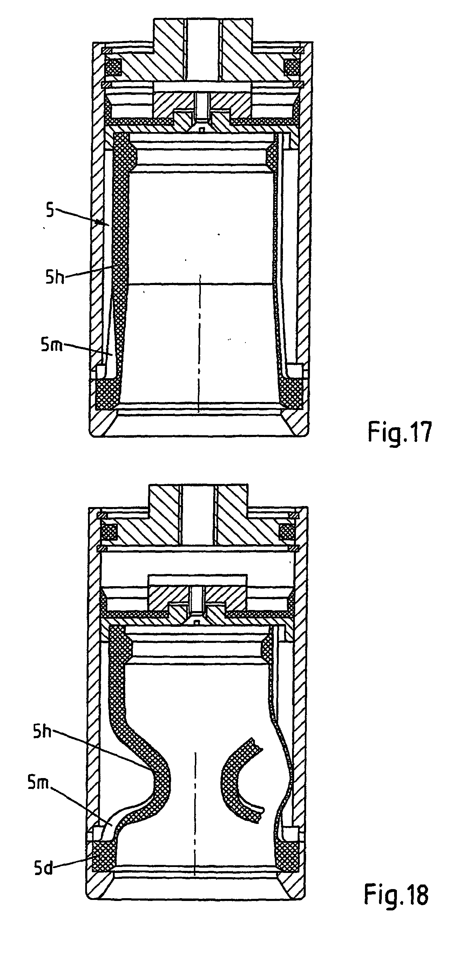

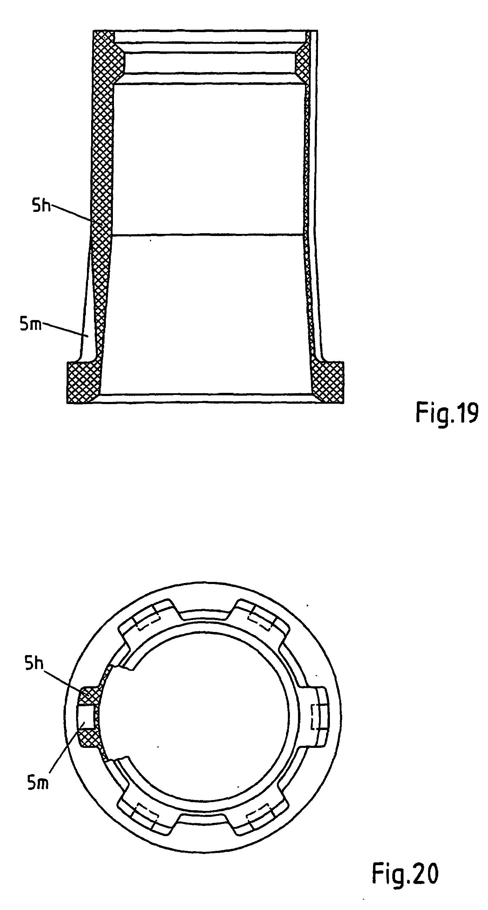

Das Ausführungsbeispiel der Figuren 17 bis 20 unterscheidet sich von den anderen darin, daß in den vorderen Bereichen der ungeschwächten Wandteile 5h axiale Nuten 5m ausgebildet sind. Diese Nuten 5m bewirken beim Stauchen des Einsatzes 5, daß sich der Einsatz 5 leichter im unteren Bereich verformt, was sich günstig auf den möglichst nahe am unteren Ende liegenden Greifbereich auswirkt. Bei Bügelverschlußflaschen hält sich der Greifdruck auf Teile des Verschlusses in erträglichen Grenzen.

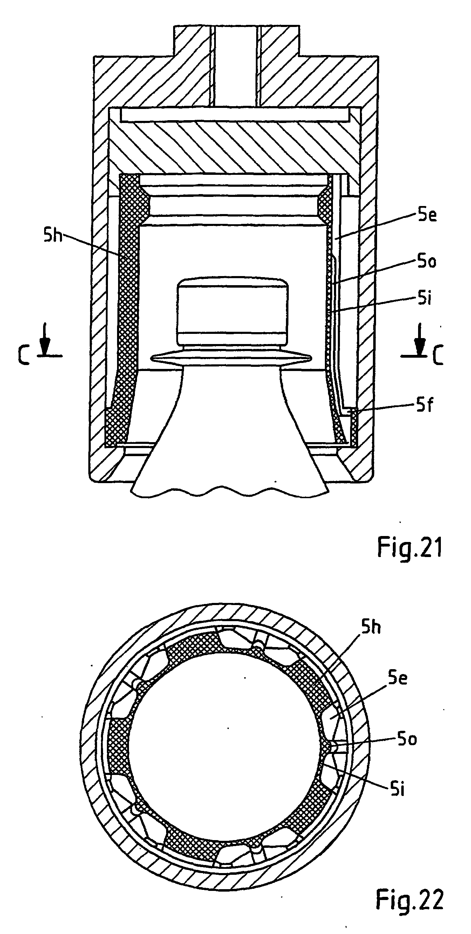

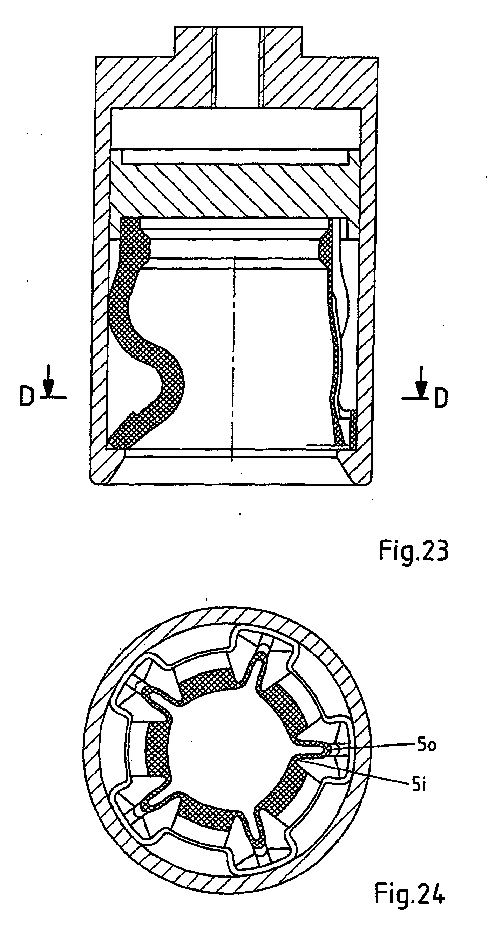

Die Ausführungsbeispiele der Figuren 21 bis 27 unterscheiden sich von allen anderen Ausführungsbeispielen darin, daß in der Mitte der Nuten 5e axial verlaufende Rippen 5e vorgesehen sind, die sich vor allem über den Greifbereich der beiden Seiten hinaus und bis in die Durchbrüche 5f erstrecken. Die Höhe der Rippen 5o ist kleiner als die Materialstärke der ungeschwächten Wandteile 5h. Diese Rippen 5o bewirken, daß sich die geschwächten Wandteile 5i bei ihrem Auffalten in die Auffalträume infolge der axialen Stauchung nicht unerwünscht scharfkantig sondern mit vergrößertem Krümmungsradius einfalten, wie Fig. 24 zeigt. Dadurch wird verhindert, daß die geschwächten Wandteile 5i in der Faltung brechen.

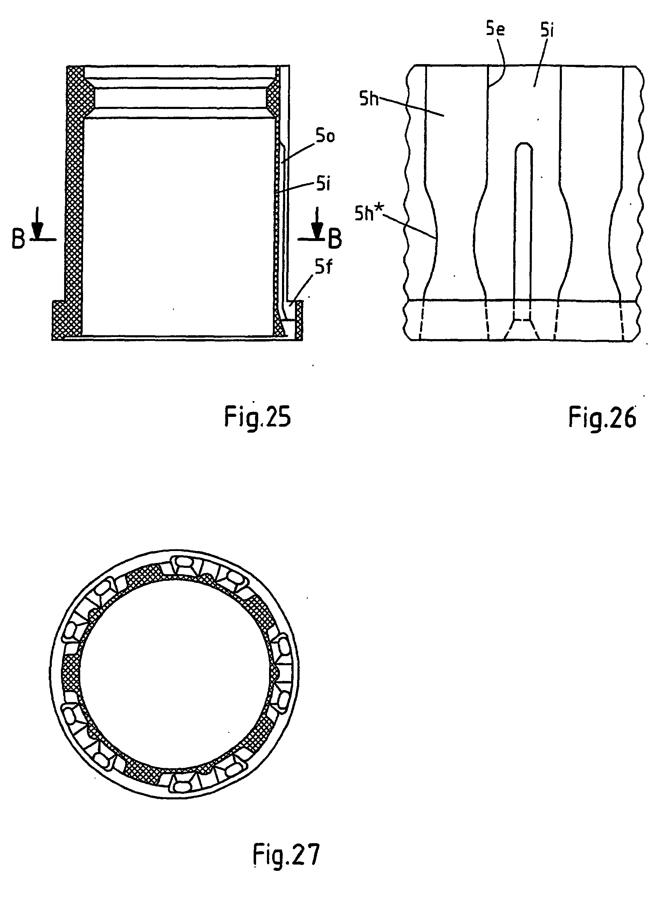

Das Ausführungsbeispiel der Figuren 25 bis 27 unterscheidet sich noch weiter dadurch, daß die die geschwächten . Wandteile 5i bildenden Nuten 5e im Greifbereich erweitert, so daß dadurch die ungeschwächten Wandteile 5h* im Greifbereich seitliche Einschnürungen bekommen. Dadurch wird kontrolliert vorgegeben, in welchem Bereich der Einsatz bei axialer Stauchung nach innen ausweicht.

Figur 16 zeigt im wesentlichen maßstabsgerecht die Proportionen des Einsatzes 5. Über den Umfang verteilt sind 4 bis 6 , vorzugsweise 5 ungeschwächte und 4 bis 6 , vorzugsweise 5 geschwächte Wandteile 5i, 5h vorgesehen, wobei deren Breitenverhältnis 1 : 1,1 bis 1,5, vorzugsweise 1 : 1,3 beträgt. Das Verhältnis der Wanddicke der ungeschwächten Wandteile 5h zu den geschwächten Wandteilen 5i beträgt 4 bis 6 : 1 , vorzugsweise 5 : 1. Darüber hinaus haben sich folgende Bemessungsverhältnisse für die axiale Länge D des Einsatzes 5 (vgl. Fig. 1 und 2b)und dessen lichte Durchmesser A jeweils im ungestauchten Zustand, für den lichten Durchmesser B und dem Abstand E dieses Durchmessers vom vorderen Rand des Einsatzes im gestauchten Zustand mit aneinanderstoßenden Wandteilen 5h und für den Außendurchmesser C des Gehäuses 1 als günstig erwiesen:
A : B = 3 bis 2, insbes. 2,5 : 1
C : A = 1,75 bis 1,25, insbes. 1,5 : 1
D : E = 2,5 bis 4,5, insbes. 3,5 : 1.

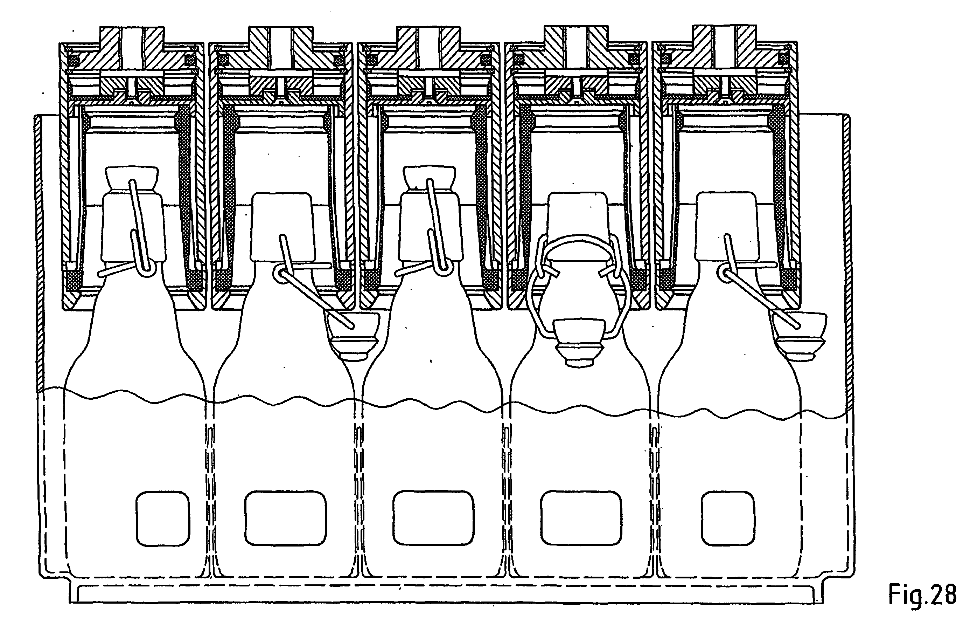

Mit vorstehenden Bemessungen läßt sich ein Satz Packtulpen sehr eng anordnen, so daß damit erfaßte Flaschen auch in Kästen mit sehr dünnen Trennstegen problemlos gestellt und aus ihnen entnommen werden können, wie die Figuren 27 und 28 zeigen.

## Patentansprüche

1. Packtulpe zum kopfseitigen Ergreifen von insbesondere durch Korken, Kron- oder Schraubverschluß verschließbaren Flaschen, die in einem topfförmigen Gehäuse (1) einen hülsenförmigen, mit seinem vorderen Ende am Topfrand (1a) des Gehäuses (1) abgestützten, elastisch verformbaren Einsatz (5) und einen auf den Einsatz (5) an dessen rückseitigem Ende mit einer axialen Druckkraft einwirkenden Stellkolben (2) aufweist, wobei in der geschlossenen Wand des Einsatzes (5) mehrere in axialer Richtung sich erstreckende und über den Umfang des Einsatzes (5) verteilte, durch außenseitige Nuten gebildete Materialschwächungen vorgesehen sind,
**dadurch gekennzeichnet, daß** auf den hülsenförmigen Einsatz (5) an seinem vorderen Ende radial nach außen wirkende Stützmittel (1a*, 5d) einwirken.

2. Packtulpe nach Anspruch 1,
**dadurch gekennzeichnet, daß** die Stützmittel (1a*) von einem den Einsatz (5) übergreifenden, am Topfrand (1a) ausgebildeten Kragen gebildet sind.

3. Packtulpe nach Anspruch 1,
**dadurch gekennzeichnet, daß** die Stützmittel von einer Versteifung des hülsenförmigen Einsatz (5) an seinem vorderen Ende gebildet sind.

4. Packtulpe nach Anspruch 3,
**dadurch gekennzeichnet, daß** die Versteifung als äußerer Verstärkungskragen (5d) ausgebildet ist.

5. Packtulpe nach einem der Ansprüche 1 bis 4,
**dadurch gekennzeichnet, daß** die Nuten (5e) sich bis zum vorderen Ende erstrecken.

6. Packtulpe nach einem der Ansprüche 1 bis 5,
**dadurch gekennzeichnet, daß** die Enden der Nuten (5e) in axiale Durchbrüche (5f) im Verstärkungskragen (5d) auslaufen, wobei in den Durchbrüchen (5f) radial angeordnete Stege (5g, 5k) vorgesehen sind.

7. Packtulpe nach einem der Ansprüche 1 bis 6,
**dadurch gekennzeichnet, daß** die Stege (5k) in radialer Richtung trapezförmig sind.

8. Packtulpe nach Anspruch 6 oder 7,
**dadurch gekennzeichnet, daß** im mittleren Bereich der außenseitigen Nuten (5e), die Auffalträume für die geschwächten Wandteile (5i) bilden, axial verlaufende Rippen (5o) vorgesehen sind.

9. Packtulpe nach einem der Ansprüche 1 bis 8,
**dadurch gekennzeichnet, daß** die zwischen den außenseitigen Nuten (5e)liegenden, in der Materialstärke ungeschwächten Wandteilen (5h) im Greifbereich durch Verbreiterung der Nuten (5e) seitliche Einschnürungen (5h*) aufweisen.

10. Packtulpe nach einem der Ansprüche 1 bis 8,
**dadurch gekennzeichnet, daß** der Einsatz (5) in zum vorderen Ende liegenden Bereich die Form eines zum vorderen Ende sich erweiternden Konus hat und daß die Außenseite des Verstärkungskragens (5d) zylindrisch ist.

11. Packtulpe nach einem der Ansprüche 1 bis 10,
**dadurch gekennzeichnet, daß** ein an der vorderen Stirnseite des Verstärkungskragens (5d) innenseitig ausgebildeter konischer Bereich gegenüber einem äußeren zylindrischen Bereich axial zurückversetzt ist.

12. Packtulpe nach einem der Ansprüche 1 bis 11,
**dadurch gekennzeichnet, daß** der Einsatz (5) an seinem rückseitigen Rand einen inneren Verstärkungskragen (5c) aufweist.

13. Packtulpe nach einem der Ansprüche 1 bis 12,
**dadurch gekennzeichnet, daß** der hülsenförmige Einsatz (5) sich aus einem im rückseitigen und mittleren Bereich zylindrischen Wandabschnitt (5a) und aus einem im vorderen Bereich konisch sich zur vorderen Stirnseite des Einsatzes (5) erweiternden Wandabschnitt (5b) zusammensetzt

14. Packtulpe nach einem der Ansprüche 1 bis 13,
**dadurch gekennzeichnet, daß**. der hülsenförmige Einsatz (5) an der Innenseite seiner Wand eine den Reib-/Formschluß zum zu ergreifenden Flaschenkopf verbessernde Profilierung aufweist.

15. Packtulpe nach einem der Ansprüche 1 bis 14,
**dadurch gekennzeichnet, daß** im vorderen Bereich der zwischen den Nuten in voller Materialstärke ausgebildeten Wandteile (5h) äußere axiale Nuten (5m) ausgebildet sind.

16. Packtulpe nach einem der Ansprüche 1 bis6,
**dadurch gekennzeichnet, daß** die Anzahl der in der Wand des Einsatzes ausgebildeten Materialschwächungen 4 bis 6, insbesondere 5, bei einem Breitenverhältnis von geschwächten und ungeschwächten Wandteilen von 1,1 bis 1,5 : 1, insbesondere 1,3 : 1, beträgt.

17. Packtulpe nach einem der Ansprüche 1 bis 14,
**dadurch gekennzeichnet, daß** die Wanddicke der ungeschwächten Wandteile zu den geschwächten BWandteilen 6 bis 4 : 1, insbesondere 5 : 1 beträgt.

18. Packtulpe nach einem der Ansprüche 1 bis 17,
**gekennzeichnet durch** folgende Bemessungsverhältnisse für die axiale Länge D des Einsatzes (5), dessen lichten Durchmesser A jeweils im ungestauchten Zustand, für den lichten Durchmesser B und dem Abstand E dieses Durchmessers vom vorderen Rand des Einsatzes im gestauchten Zustand mit aneinanderstoßenden Stegen (5h) und für den Außendurchmesser C des Gehäuses (1):
A : B = 3 bis 2, insbes. 2,5 : 1
C : A = 1,75 bis 1,25, insbes. 1,5 : 1
D : E = 2,5 bis 4,5, insbes. 3,5 : 1.

19. Packtulpeneinsatz nach einem der Ansprüche 1 bis 18, **dadurch gekennzeichnet, daß** der Einsatz von einem nach der Reaktionsgießmethode, oder im Spritzgußverfahren oder Heißpreßverfahren hergestellter Formkörper aus einem Polyurethan-Elastomer ist, für das als Rohstoff ein Reaktionsgemisch aus Polyester- oder Polyetherpolyolen, Diol- oder Diaminvernetzer und aromatische Diisocyanate, insbesondere Naphtalin-1,5-diisocyanat dient.

## Claims

1. A packing tulip for gripping in particular bottles that can be sealed by corks, regular caps or screw-type caps, whose pot-shaped casing (1) incorporates a sleeve-shaped, elastically deformable insert (5) whose front end is supported against the pot edge (1a) of the casing (1), and a setting piston (2) that exerts a compressive force on the rearward end of the insert (5), wherein several weakened material areas formed by external grooves are provided in the closed wall of the insert (5) that extend in an axial direction and are distributed over the periphery of the insert (5), **characterized in that** radially outwardly acting support means (1a*, 5d) impact the front end of the sleeve-shaped insert (5).

2. The packing tulip according to claim 1, **characterized in that** the support means (1a*) consist of a collar that is formed at the pot edge (1a) and overlaps the insert (5).

3. The packing tulip according to claim 1, **characterized in that** the support means consist of a stiffening of the sleeve-shaped insert (5) at its front end.

4. The packing tulip according to claim 3, **characterized in that** the stiffening is designed as an external reinforcing collar (5d).

5. The packing tulip according to one of claims 1 to 4, **characterized in that** the grooves (5e) extend up to the front end.

6. The packing tulip according to one of claims 1 to 5, **characterized in that** the ends of the grooves (5e) empty out into axial openings (5f) in the reinforcing collars (5d), wherein radially arranged webs (5g, 5k) are provided in the openings (5f).

7. The packing tulip according to one of claims 1 to 6, **characterized in that** the webs (5k) are trapezoidal in a radial direction.

8. The packing tulip according claim 6 or 7, **characterized in that** axially running ribs (50) are provided in the middle area of the external grooves (5e), which form fold-open spaces for the weakened wall sections (5i) .

9. The packing tulip according to one of claims 1 to 8, **characterized in that** the wall sections (5h) not weakened in terms of material strength and lying between the external grooves (5e) have lateral constrictions (5h*) in the gripping area via the expansion of grooves (5e).

10. The packing tulip according to one of claims 1 to 8, **characterized in that** the insert (5) is shaped like a cone that expands toward the front end in the area lying toward the front end, and that the outside of the reinforcing collar (5d) is cylindrical.

11. The packing tulip according to one of claims 1 to 10, **characterized in that** a conical area internally formed on the front face of the reinforcing collar (5d) is axially recessed relative to an external cylindrical area.

12. The packing tulip according to one of claims 1 to 11, **characterized in that** the insert (5) has an internal reinforcing collar (5c) at its rearward edge.

13. The packing tulip according to one of claims 1 to 12, **characterized in that** the sleeve-shaped insert (5) consists of a wall section (5a) that is cylindrical in the rearward and middle area, and a wall section (5b) that is conical in the front area and expands toward the front face of the insert (5).

14. The packing tulip according to one of claims 1 to 13, **characterized in that** the sleeve-shaped insert (5) has a profile on its interior wall that improves the friction/positive locking relative to the bottle head to be gripped.

15. The packing tulip according to one of claims 1 to 14, **characterized in that** external axial grooves (5m) are formed in the front area of the wall sections (5h) with solid material thickness between the grooves.

16. The packing tulip according to one of claims 1 to 6, **characterized in that** the number of weakened material areas formed in the wall of the insert measures 4 to 6, in particular 5, at a width ratio of weakened to non-weakened parts of 1.1 to 1.5:1, in particular 1.3:1.

17. The packing tulip according to one of claims 1 to 14, **characterized in that** the wall thickness of the non-weakened wall parts relative to the weakened wall parts measures 6 to 4:1, in particular 5:1.

18. The packing tulip according to one of claims 1 to 17, **characterized by** the following dimensioning ratios for the axial length D for insert (5), its internal diameter A in a respectively unstrained condition, for the internal diameter B and the distance E of this diameter from the front edge of the insert in a strained condition, with consecutive webs (5h), and for the outside diameter C of the casing (1):
A : B = 3 to 2, in particular 2.5 : 1
C : A = 1.75 to 1.25, in particular 1.5 : 1
D : E = 2.5 to 4.5, in particular 3.5 : 1.

19. The packing tulip according to one of claims 1 to 18, **characterized in that** the insert is a molding manufactured via reaction injection molding, injection molding or hot press molding out of a polyurethane elastomer, the raw material in which consists of a reaction mixture of polyester or polyether polyols, diol or diamine cross linkers and aromatic diisocyanates, in particular naphthalin-1,5-diisocyanate.

## Revendications

1. Tulipe d'emballage pour mise en prise du côté de la tête de bouteilles pouvant être fermées en particulier à l'aide de bouchons, d'une fermeture par crénelage ou par vissage comportant dans un boîtier (1) en forme de godet une garniture de joint (5) déformable élastiquement en forme de fourreau soutenue par son extrémité avant sur la bordure du pot (1a) du boîtier (1) et un piston de réglage (2) agissant sur la garniture de joint (5) sur son extrémité latérale arrière avec une force de pression axiale, plusieurs affaiblissements du matériau formés par des rainures du côté externe, répartis sur la périphérie de la garniture de joint (5) et s'étendant en direction axiale étant prévus dans la paroi fermée de la garniture de joint (5), **caractérisée en ce que** des moyens de soutien (1a*, 5d) agissant radialement vers l'extérieur ont une influence sur la garniture de joint (5) en forme de fourreau sur son extrémité avant.

2. Tulipe d'emballage selon la revendication 1, **caractérisée en ce que** les moyens de soutien (1a*) sont formés par une collerette conçue sur la bordure du godet (1a) et en prise avec la garniture de joint (5).

3. Tulipe d'emballage selon la revendication 1, **caractérisée en ce que** les moyens de soutien sont formés par un renforcement de la garniture de joint (5) en forme de fourreau sur sa partie avant.

4. Tulipe d'emballage selon la revendication 3, **caractérisée en ce que** le renforcement est conçu comme une collerette de renforcement extérieure (5d).

5. Tulipe d'emballage selon l'une quelconque des revendications 1 à 4, **caractérisée en ce que** les rainures (5e) s'étendent jusqu'à l'extrémité avant.

6. Tulipe d'emballage selon l'une quelconque des revendications 1 à 5, **caractérisée en ce que** les extrémités des rainures (5e) sont disposées dans les ouvertures axiales (5f) de la collerette de renforcement (5d), des entretoises disposées radialement (5g, 5k) étant prévues dans les ouvertures (5f).

7. Tulipe d'emballage selon l'une quelconque des revendications 1 à 6, **caractérisée en ce que** les entretoises (5k) sont en forme trapézoïdale dans la direction radiale.

8. Tulipe d'emballage selon la revendication 6 ou 7, **caractérisée en ce que** des ailettes (5o) s'étendant radialement sont prévues dans la zone centrale des rainures du côté externe (5e) formant les espaces de repliage des parties de paroi affaiblies (5i).

9. Tulipe d'emballage selon l'une quelconque des revendications 1 à 8, **caractérisée en ce que** les parties de paroi (5h) non affaiblies dans la solidité du matériau, se trouvant entre les rainures du côté externe (5e) comportent des rétrécissements (5h*) latéraux dans la zone de prise au moyen de l'élargissement des rainures (5e).

10. Tulipe d'emballage selon l'une quelconque des revendications 1 à 8, **caractérisée en ce que** la garniture de joint (5) dans la zone se trouvant vers l'extrémité avant a la forme d'un cône s'élargissant vers l'extrémité avant et **en ce que** le côté externe de la collerette de renforcement (5d) est cylindrique.

11. Tulipe d'emballage selon l'une quelconque des revendications 1 à 10, **caractérisée en ce qu'**une zone conique conçue sur le côté intérieur sur le côté frontal avant de la collerette de renforcement (5d) est reculée par rapport à une zone cylindrique externe.

12. Tulipe d'emballage selon l'une quelconque des revendications 1 à 11, **caractérisée en ce que** la garniture de joint (5) comporte une collerette de renforcement (5c) interne sur sa bordure du côté arrière.

13. Tulipe d'emballage selon l'une quelconque des revendications 1 à 12, **caractérisée en ce que** la garniture de joint (5) en forme de fourreau se compose d'une section de paroi (5a) cylindrique dans la zone centrale du côté arrière et d'une section de paroi (5b) s'étendant coniquement dans la zone avant par rapport au côté frontal de la garniture de joint (5).

14. Tulipe d'emballage selon l'une quelconque des revendications 1 à 13, **caractérisée en ce que** la garniture de joint (5) en forme de fourreau comporte sur le côté interne de sa paroi un profilage améliorant l'extrémité de frottement/du moule destiné à la mise en prise de la tête de bouteille.

15. Tulipe d'emballage selon l'une quelconque des revendications 1 à 14, **caractérisée en ce que** des rainures axiales externes (5m) sont conçues dans la zone avant de la partie de paroi (5h) conçue entre les rainures dans la solidité complète du matériau.

16. Tulipe d'emballage selon l'une quelconque des revendications 1 à 6, **caractérisée en ce que** le nombre des affaiblissements du matériau 4 à 6, en particulier 5, conçus dans la paroi de la garniture de joint s'élève dans un rapport de largeur des parties de paroi affaiblies et non affaiblies de 1,1 à 1,5:1, en particulier 1,3:1.

17. Tulipe d'emballage selon l'une quelconque des revendications 1 à 14, **caractérisée en ce que** l'épaisseur de paroi des pièces de paroi non affaiblies par rapport aux pièces de paroi affaiblies s'élève de 6 à 4:1, en particulier 5:1.

18. Tulipe d'emballage selon l'une quelconque des revendications 1 à 17, **caractérisée par** les rapports de mesure suivants pour la longueur axiale D de la garniture de joint (5), son diamètre libre A en état non enfoncé, pour le diamètre libre B et l'espace E de ce diamètre de la bordure avant de la garniture de joint à l'état enfoncé avec les entretoises s'assemblant bout à bout (5h) et pour le diamètre externe C du boîtier (1) :
A : B = 3 à 2, en particulier 2,5 : 1
C : A = 1,75 à 1,25, en particulier 1,5 : 1
D : E = 2,5 à 4,5, en particulier 3,5 : 1.

19. Tulipe d'emballage selon l'une quelconque des revendications 1 à 18, **caractérisée en ce que** la garniture de joint est un corps moulé en élastomère de polyuréthane fabriqué selon une méthode de coulage par réaction, ou un processus de moulage par injection ou un processus de pressage à chaud, pour lequel on utilise comme produit de départ un mélange réactionnel de polyol de polyester ou de polyéther, un agent de réticulation diol ou diamine et des diisocyanates aromatiques, en particulier le diisocyanate -1,5- de naphtalène.
